# EUROPEAN PATENT APPLICATION

(11) **EP 4 645 969 A1**
(43) Date of publication of application: **05.11.2025**
(21) Application number: 23915337.2
(22) Date of filing: 12.01.2023
(51) Int. Cl.: H04W 56/00

(54) **COMMUNICATION METHOD AND APPARATUS**

(71) Applicant: Huawei Technologies Co., Ltd., Shenzhen, Guangdong 518129 (CN)
(72) Inventor: ZHOU, Guangjian, Shenzhen, Guangdong 518129 (CN)
(74) Representative: Körber, Martin Hans
(86) International application number: PCT/CN2023/071919
(87) International publication number: WO 2024/148567

(57) **Abstract**

This application discloses a communication method and apparatus. A switch device or a radio frequency device in a fronthaul network monitors clock offset information between first time information and second time information, where the first time information is time information synchronized through a fronthaul interface corresponding to a first baseband unit, and the second time information is time information synchronized through a fronthaul interface corresponding to a second baseband unit. The clock offset information is used to assist in fault handling of a baseband unit, thereby reducing operation and maintenance costs and improving fault handling efficiency.

## Description

### TECHNICAL FIELD

This application relates to the field of communication technologies, and in particular, to a communication method and apparatus.

### BACKGROUND

In a distributed base station architecture, one radio frequency device may establish a communication connection to a plurality of baseband units (baseband unit, BBU), but the radio frequency device keeps time synchronization with only one of the plurality of BBUs. If time of the plurality of BBUs is not synchronous, signal interference may be generated between communication between the radio frequency device and the plurality of BBUs, resulting in an abnormal communication service.

Currently, when a communication service of a distributed base station is abnormal, a worker needs to carry a test device and separately check time of different BBUs on site to perform fault handling. This approach relies on a manual operation and a test instrument, resulting in high operation and maintenance costs, prolonged fault handling time, and low efficiency.

### SUMMARY

This application provides a communication method and apparatus, to reduce operation and maintenance costs and improve fault handling efficiency corresponding to a BBU in a fronthaul network.

According to a first aspect, an embodiment of this application provides a communication method. The method may include: A first device obtains first time information and second time information, and sends clock offset information. The clock offset information indicates an offset between the first time information and the second time information, the first time information is time information synchronized through a fronthaul interface corresponding to a first baseband unit, and the second time information is time information synchronized through a fronthaul interface corresponding to a second baseband unit.

In the foregoing design, when a plurality of BBUs access a same fronthaul network, a clock offset between time information synchronized through clock sources of different BBUs is determined. Fault handling is performed on a related BBU based on the clock offset. Manually carrying a test device is not required, which can reduce operation and maintenance costs and improve fault handling efficiency.

In a possible design, before sending the clock offset information, the first device may further determine, based on the first time information and the second time information, that the first baseband unit is a master clock device. Optionally, the master clock device may alternatively be referred to as a primary BBU.

In a possible design, the second baseband unit may be a non-master clock device (or referred to as a non-primary BBU), or the second baseband unit may be any one of a plurality of non-master clock devices. In this design, a clock offset between one or more non-primary BBUs and the primary BBU can be monitored.

In a possible design, the first device may send the clock offset information to a second device, where the clock offset information may be used for fault determining for the second baseband unit. The second device may be the second baseband unit or a network management device, so that fault handling on a baseband unit can be flexibly implemented by using different devices.

In a possible design, the first device may further send first information to the first baseband unit, where the first information may indicate one or more of the following: The first baseband unit is a master clock device; and a clock offset between the first baseband unit and the master clock device is zero. Based on such a design, the first baseband unit may determine that the first baseband unit is the master clock device.

In a possible design, the first device may be a radio frequency device or a switch device in a fronthaul network, where the radio frequency device communicates with the first baseband unit and the second baseband unit.

In a possible design, when the first device is a switch device in a fronthaul network, the switch device may further provide a clock source for a radio frequency device based on the first time information, where the radio frequency device communicates with the first baseband unit and the second baseband unit. Such a design can implement synchronization between the radio frequency device and the first baseband unit.

In a possible design, the first baseband unit is time-synchronized with a first external clock reference source, and the second baseband unit is time-synchronized with a second external clock reference source, where the first external clock reference source and the second external clock reference source may be the same or different. In other words, the method provided in this embodiment of this application may be applied to a scenario in which baseband units are not synchronous because external clock reference sources are not synchronous, and may also be applied to a scenario in which baseband units are not synchronous because external clock reference sources are the same but jump occurs.

According to a second aspect, an embodiment of this application provides a communication method. The method may include: A second device receives clock offset information, where the clock offset information indicates an offset between first time information and second time information, the first time information is time information synchronized through a fronthaul interface corresponding to a first baseband unit, and the second time information is time information synchronized through a fronthaul interface corresponding to a second baseband unit; and the second device determines, based on the clock offset information, whether a fault exists on the second baseband unit.

In a possible design, the second device may be a radio frequency device or a switch device in a fronthaul network.

In a possible design, the first baseband unit may be a master clock device (or referred to as a primary BBU).

In a possible design, the second baseband unit may be a non-master clock device (or referred to as a non-primary BBU), or the second baseband unit is any one of a plurality of non-master clock devices.

In a possible design, the first baseband unit is time-synchronized with a first external clock reference source, and the second baseband unit is time-synchronized with a second external clock reference source, where the first external clock reference source and the second external clock reference source may be the same or different.

According to a third aspect, an embodiment of this application provides a communication apparatus. The communication apparatus may be a first device, or may be an apparatus, a module, a chip, or the like in the first device, or may be an apparatus that can be used in a matching manner with the first device. In a design, the communication apparatus may include modules that are in one-to-one correspondence with the methods/operations/steps/actions described in the first aspect. The modules may be implemented by a hardware circuit, software, or a combination of a hardware circuit and software. In a design, the communication apparatus may include a processing module and a communication module.

The communication module is configured to obtain first time information and second time information, where the first time information is time information synchronized through a fronthaul interface corresponding to a first baseband unit, and the second time information is time information synchronized through a fronthaul interface corresponding to a second baseband unit; and
send clock offset information, where the clock offset information indicates an offset between the first time information and the second time information.

The processing module is configured to control the communication module to perform an obtaining or sending operation.

In a possible design, the processing module is further configured to determine, based on the first time information and the second time information, that the first baseband unit is a master clock device. Optionally, the master clock device may alternatively be referred to as a primary BBU.

In a possible design, the second baseband unit may be a non-master clock device (or referred to as a non-primary BBU), or the second baseband unit may be any one of a plurality of non-master clock devices.

In a possible design, the communication module may be configured to send the clock offset information to a second device, where the clock offset information is used for fault determining for the second baseband unit. The second device may be the second baseband unit or a network management device.

In a possible design, the communication module may be further configured to send first information to the first baseband unit, where the first information indicates one or more of the following: The first baseband unit is a master clock device; and a clock offset between the first baseband unit and the master clock device is zero. Based on such a design, the first baseband unit may determine that the first baseband unit is the master clock device.

In a possible design, the first device may be a radio frequency device or a switch device in a fronthaul network, where the radio frequency device communicates with the first baseband unit and the second baseband unit.

In a possible design, when the first device is a switch device in a fronthaul network, the processing module is further configured to provide a clock source for a radio frequency device based on the first time information, where the radio frequency device communicates with the first baseband unit and the second baseband unit.

In a possible design, the first baseband unit is time-synchronized with a first external clock reference source, and the second baseband unit is time-synchronized with a second external clock reference source, where the first external clock reference source and the second external clock reference source are the same or different.

According to a fourth aspect, an embodiment of this application provides a communication apparatus. The communication apparatus may be a second device, or may be an apparatus, a module, a chip, or the like in the second device, or may be an apparatus that can be used in a matching manner with the second device. In a design, the communication apparatus may include modules that are in one-to-one correspondence with the methods/operations/steps/actions described in the second aspect. The modules may be implemented by a hardware circuit, software, or a combination of hardware circuit and software. In a design, the communication apparatus may include a processing module and a communication module.

The communication module is configured to receive clock offset information, where the clock offset information indicates an offset between the first time information and the second time information, the first time information is time information synchronized through a fronthaul interface corresponding to a first baseband unit, and the second time information is time information synchronized through a fronthaul interface corresponding to a second baseband unit; and
the processing module is configured to determine, based on the clock offset information, whether a fault exists on the second baseband unit.

In a possible design, the second device may be a radio frequency device or a switch device in a fronthaul network.

In a possible design, the first baseband unit may be a master clock device (or referred to as a primary BBU).

In a possible design, the second baseband unit may be a non-master clock device (or referred to as a non-primary BBU), or the second baseband unit may be any one of a plurality of non-master clock devices.

In a possible design, the first baseband unit is time-synchronized with a first external clock reference source, and the second baseband unit is time-synchronized with a second external clock reference source, where the first external clock reference source and the second external clock reference source may be the same or different.

According to a fifth aspect, an embodiment of this application provides a communication apparatus. The communication apparatus may include a processor, configured to implement the method described in the first aspect. The processor is coupled to a memory, the memory is configured to store instructions and data, and when the processor executes the instructions stored in the memory, the method described in the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The communication interface is configured to obtain first time information and second time information, where the first time information is time information synchronized through a fronthaul interface corresponding to a first baseband unit, and the second time information is time information synchronized through a fronthaul interface corresponding to a second baseband unit; and
send clock offset information, where the clock offset information indicates an offset between the first time information and the second time information.

The processor is configured to control the communication interface to perform an obtaining or sending operation.

According to a sixth aspect, an embodiment of this application provides a communication apparatus. The communication apparatus may include a processor, configured to implement the method described in the second aspect. The processor is coupled to a memory. The memory is configured to store instructions and data. When the processor executes the instructions stored in the memory, the method according to the second aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The communication interface is configured to receive clock offset information, where the clock offset information indicates an offset between the first time information and the second time information, the first time information is time information synchronized through a fronthaul interface corresponding to a first baseband unit, and the second time information is time information synchronized through a fronthaul interface corresponding to a second baseband unit; and
the processor is configured to determine, based on the clock offset information, whether a fault exists on the second baseband unit.

According to a seventh aspect, an embodiment of this application provides a communication system, including the communication apparatus according to the third aspect or the fifth aspect, and the communication apparatus according to the fourth aspect or the sixth aspect.

According to an eighth aspect, an embodiment of this application further provides a computer program. When the computer program is run on a computer, the computer is enabled to perform the method according to the first aspect or the second aspect.

According to a ninth aspect, an embodiment of this application further provides a computer program product, including instructions. When the instructions are run on a computer, the computer is enabled to perform the method according to the first aspect or the second aspect.

According to a tenth aspect, an embodiment of this application further provides a computer-readable storage medium. The computer-readable storage medium stores a computer program or instructions. When the computer program or the instructions are run on a computer, the computer is enabled to perform the method according to the first aspect or the second aspect.

According to an eleventh aspect, an embodiment of this application further provides a chip. The chip is configured to read a computer program stored in a memory, to perform the method according to the first aspect or the second aspect, or the chip includes a circuit configured to perform the method according to the first aspect or the second aspect.

According to a twelfth aspect, an embodiment of this application further provides a chip system. The chip system includes a processor, configured to support an apparatus in implementing the method according to the first aspect or the second aspect. In a possible design, the chip system further includes a memory, and the memory is configured to store a program and data that are necessary for the apparatus. The chip system may include a chip, or may include a chip and another discrete component.

For effects of the solution provided in any one of the second aspect to the twelfth aspect, refer to corresponding descriptions in the first aspect.

### BRIEF DESCRIPTION OF DRAWINGS

FIG. 1 is a diagram of a structure of a communication system;
FIG. 2A is a diagram of a radio access network RAN;
FIG. 2B is a diagram of functional modules of an access network device;
FIG. 2C is a diagram of division into functional module of a physical layer;
FIG. 2D is another diagram of division into functional modules of a physical layer;
FIG. 3 is a diagram of a structure of a fronthaul network;
FIG. 4A is a diagram of a structure of a distributed base station;
FIG. 4B is a diagram of a structure of a distributed base station;
FIG. 5A is a diagram of a structure of a distributed base station;
FIG. 5B is a diagram of a structure of a distributed base station;
FIG. 5C is a diagram of a structure of a distributed base station;
FIG. 6 is a schematic flowchart of a communication method;
FIG. 7 is a schematic flowchart of a communication method;
FIG. 8 is a diagram of a structure of a communication apparatus;
FIG. 9A is a diagram of a structure of a distributed base station;
FIG. 9B is a diagram of a structure of a distributed base station; and
FIG. 10 is a diagram of a structure of another communication apparatus.

### DESCRIPTION OF EMBODIMENTS

To make objectives, technical solution, and advantages of embodiments of this application clearer, the following further describes embodiments of this application in detail with reference to the accompanying drawings.

At least one (item) related in embodiments of this application indicates one or more (items). "A plurality of (items)" means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of this application to describe objects, these objects should not be limited by these terms. These terms are merely used to distinguish the objects from each other.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "exemplary" or "for example" is used to represent giving an example, an illustration, or a description. Any method or design solution described as an "example" or "for example" in embodiments of this application should not be explained as being more preferred or having more advantages than another method or design solution. To be precise, use of the word such as "example" or "for example" is intended to present a relative concept in a specific manner.

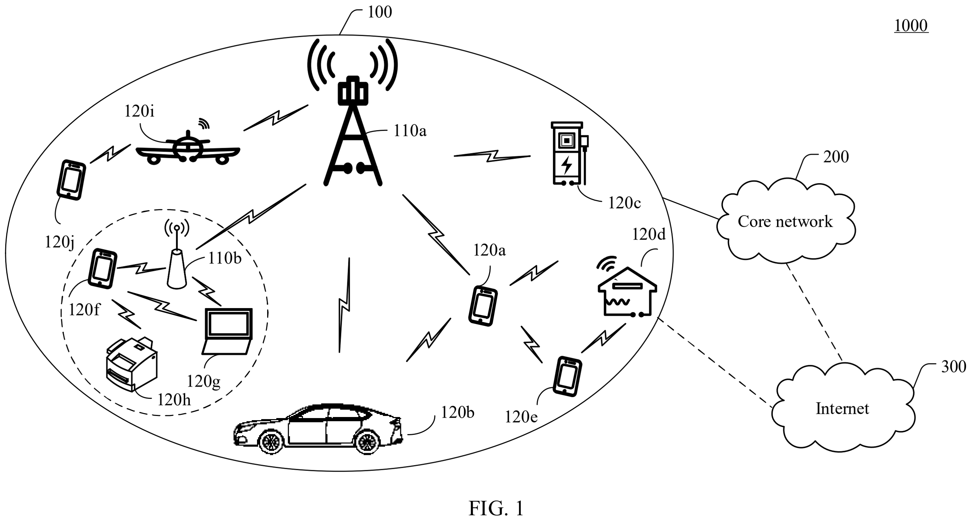

Technologies provided in embodiments of this application may be applied to various communication systems. FIG. 1 is a diagram of a possible and non-limiting communication system. As shown in FIG. 1, a communication system 1000 includes a radio access network (radio access network, RAN) 100 and a core network (core network, CN) 200. The RAN 100 includes at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. The RAN node 110 is configured to help the terminal implement radio access. A core network device in the core network 200 and the RAN node 110 in the RAN 100 may be different physical devices, or may be a same physical device that integrates a logical function of the core network and a logical function of the radio access network. Optionally, the RAN node 110 may be further connected to the Internet 300, or connected to the Internet 300 by using the core network 200.

The RAN 100 may be a cellular system related to the 3^{rd} Generation Partnership Project (3^{rd} generation partnership project, 3GPP), for example, a 4^{th} generation (4^{th} generation, 4G) or a 5^{th} generation (5^{th} generation, 5G) mobile communication system, or a future-oriented evolved system (for example, a 6G mobile communication system). The RAN 100 may alternatively be an open radio access network (open RAN, O-RAN, or ORAN) or a cloud radio access network (cloud radio access network, CRAN). The RAN 100 may alternatively be a communication system that integrates the foregoing two or more systems. The 4G mobile communication system includes a long term evolution (long term evolution, LTE) system, and the 5G mobile communication system includes a new radio (new radio, NR) system.

The plurality of RAN nodes 110 in the communication system 1000 may be a same category of nodes, or may be different categories of nodes. In some scenarios, roles of the RAN node 110 and the terminal 120 are relative to each other. For example, the network element 120i in FIG. 1 may be a helicopter or an unmanned aerial vehicle, and may be configured as a mobile base station. For the terminal 120j that accesses the RAN 100 by using the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

The following describes the terminal and the RAN node in detail.

### (1) Terminal

The terminal may alternatively be referred to as a terminal device, user equipment (user equipment, UE), a mobile station, a mobile terminal, or the like. The terminal may be a user-side entity configured to receive or transmit a signal. The terminal may communicate with one or more core networks by using a RAN. The terminal includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The terminal may be widely applied to various scenarios, for example, cellular communication, device-to-device (device-to-device, D2D), vehicle to everything (vehicle to everything, V2X) communication, end-to-end P2P, machine to machine M2M, machine-type communication (machine-type communication, MTC), Internet of Things (internet of things, IoT), virtual reality (virtual reality, VR), augmented reality (augmented reality, AR), industrial control, self-driving, telemedicine, smart grid, smart furniture, smart office, smart wearables, smart transportation, smart city, mobile phones, tablet computers, computers with a wireless transceiver function, wearable devices, vehicles, unmanned aerial vehicles, helicopters, aircrafts, ships, robots, robot arms, and smart home devices. A device form of the terminal is not limited in embodiments of this application.

### (2) RAN node

In a possible scenario, the RAN node may alternatively be referred to as an access network device, a RAN entity, an access node, a network device, or the like, and forms a part of a communication system, to help a terminal implement radio access. The RAN node may be a base station (base station, BS), an evolved base station (evolved base station, eNB), an access point (access point, AP), a transmission reception point (transmission reception point, TRP), a next generation NodeB (next generation NodeB, gNB), a next generation base station in a 6^{th} generation (6^{th} generation, 6G) mobile communication system, a base station in a future mobile communication system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

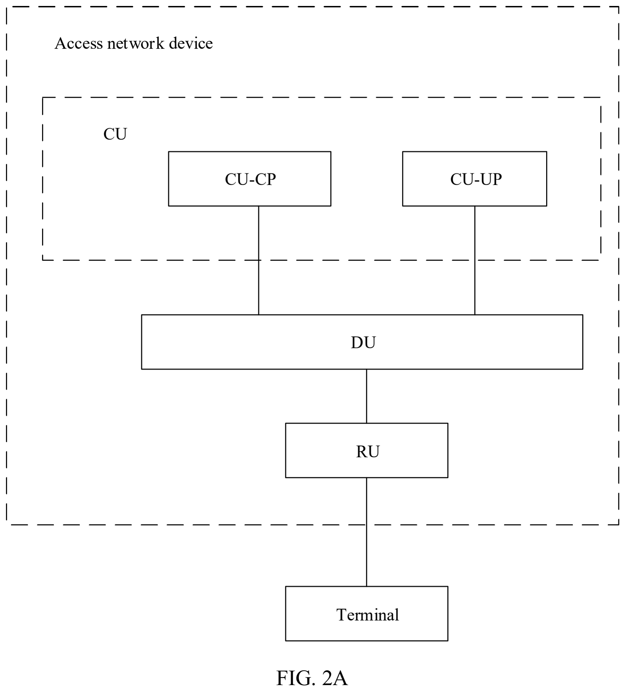

In another possible scenario, a plurality of RAN nodes coordinate to assist a terminal in implementing radio access, and different RAN nodes separately implement some functions of an access network device. FIG. 2A is a diagram of a radio access network RAN. As shown in FIG. 2A, an access network device includes a central unit (central unit, CU), a distributed unit (distributed unit, DU), and a radio unit (radio unit, RU). The CU may be connected to a core network and one or more DUs. One DU may be connected to one or more RUs, and an interface between the DU and the RU may be referred to as a fronthaul interface (fronthaul, FH). Optionally, the CU may have some functions of the core network, and the CU includes a CU-control plane (control plane, CP) and a CU-user plane (user plane, UP). The RU is configured to send a signal to a terminal or receive a signal from the terminal. For example, a RAN node may be a CU, a DU, a CU-CP, a CU-UP, or an RU.

It may be understood that in different systems, the CU (or the CU-CP and the CU-UP), the DU, or the RU may alternatively have different names, but a person skilled in the art may understand meanings of the names. For example, in an ORAN system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

### (3) Division into power modules of an access network device

Communication between an access network device and a terminal complies with a specific protocol layer structure. The protocol layer may include a control plane protocol layer and a user plane protocol layer. For example, the control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like. The CU and the DU may be configured based on a protocol layer function of a radio network implemented thereby. For example, the CU is configured to implement functions of the PDCP layer and an upper protocol layer (for example, the RRC layer and/or the SDAP layer), and the DU is configured to implement a function of a protocol layer below the PDCP layer (for example, the RLC layer, the MAC layer, and/or the PHY layer). For another example, the CU is configured to implement a function of a protocol layer above the PDCP layer (for example, the RRC layer and/or the SDAP layer), and the DU is configured to implement functions of the PDCP layer and a lower protocol layer (for example, the RLC layer, the MAC layer, and/or the PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer.

The foregoing configuration of the CU or the DU is merely an example, and functions of the CU or the DU may alternatively be configured based on a requirement. For example, the CU or the DU may be configured to have functions of more protocol layers, or the CU or the DU may be configured to have some processing functions of protocol layers. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may be performed based on service types or other system requirements. For example, division may be performed based on latencies. Functions whose processing time needs to satisfy a low latency requirement are set on the DU, and functions whose processing time does not need to satisfy the latency requirement are set on the CU.

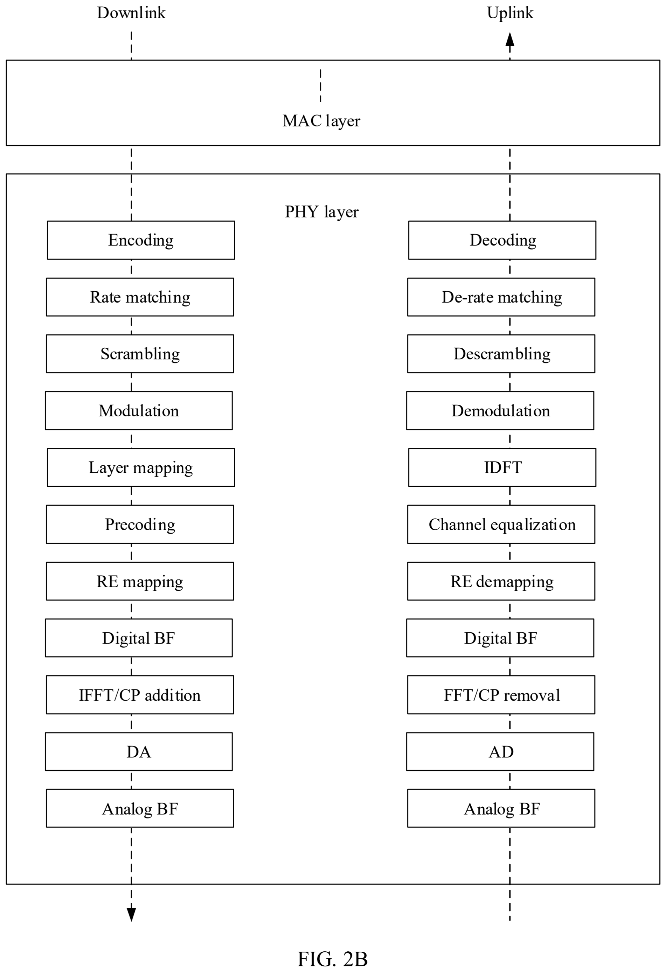

Optionally, the DU and the RU may cooperate to jointly implement a function of the PHY layer. As shown in FIG. 2B, an access network device includes one or more functional modules, configured to implement signal processing. Using the function of the physical layer as an example, the access network device includes one or more of the following functional modules: encoding, rate matching, scrambling, modulation, layer mapping, precoding, resource element (resource element, RE) mapping, digital beamforming (beamforming, BF), inverse fast Fourier transformation (inverse fast fourier transformation, IFFT)/cyclic prefix (cyclic prefix, CP) addition, decoding, de-rate matching, descrambling, demodulation, inverse discrete Fourier transformation (inverse discrete fourier transformation, IDFT), channel equalization (or channel estimation), RE demapping, digital BF, and fast Fourier transform (fast Fourier transform, FFT)/CP removal, digital to analog (digital to analog, DA) conversion, analog BF, analog to digital (analog to digital, AD) conversion, or analog BF.

The one or more functional modules may be implemented by using software, hardware, or a combination of software and hardware. Physically, the functional modules may be discrete or integrated. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) according to a design, or do not include a functional module shown in FIG. 2B (for example, do not include the digital BF module).

Functions of the DU and the RU may be configured in a plurality of manners based on a design.

For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. A higher-layer function of the physical layer may include a part of functions of the physical layer, and this part of functions are closer to the MAC layer. The lower-layer function of the physical layer may include another part of functions of the physical layer, and this part of functions are closer to an intermediate radio frequency side.

There is a fronthaul interface between the DU and the RU. For example, a communication protocol of the fronthaul interface may be a common public radio interface (common public radio interface, CPRI) interface protocol, an enhanced common public radio interface (enhanced common public radio interface, eCPRI) interface protocol, or the like. This is not limited. Different fronthaul interfaces correspond to DUs and RUs with different functions.

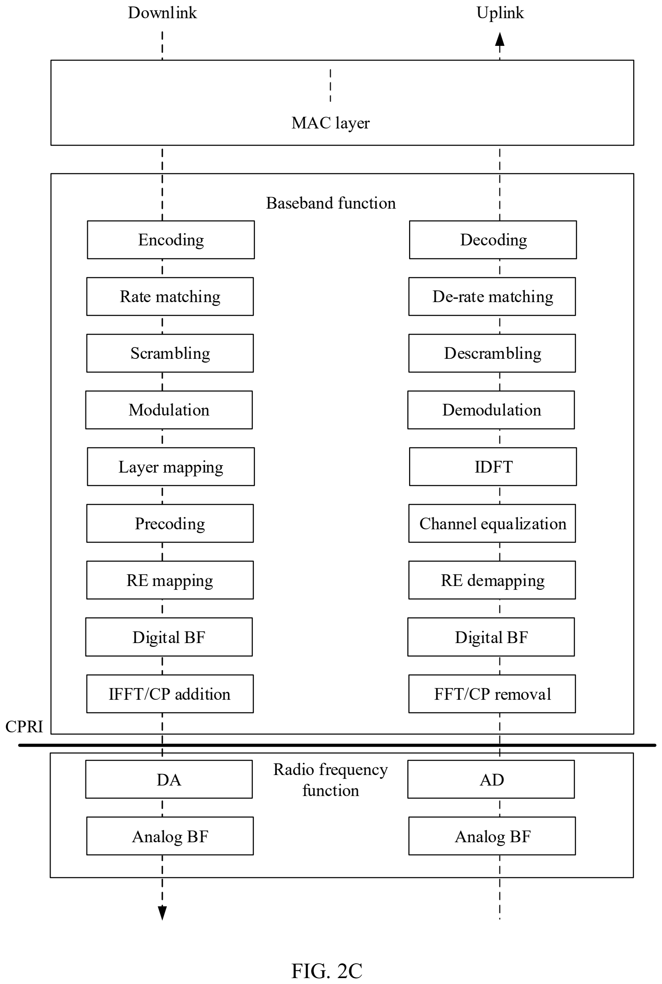

As shown in FIG. 2C, if the fronthaul interface between the DU and the RU is a CPRI, PHY functions shown in FIG. 2B are divided into baseband functions and radio frequency functions. The DU is configured to implement one or more of the baseband functions, and the RU is configured to implement one or more of the radio frequency functions.

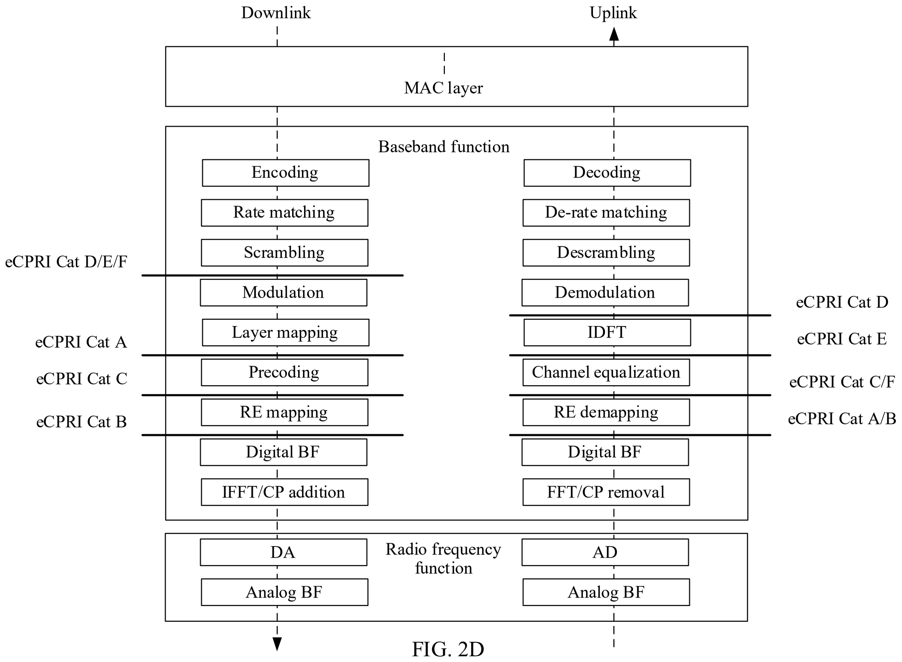

As shown in FIG. 2D, if the fronthaul interface between the DU and the RU is an eCPRI, compared with a CPRI, some downlink and/or uplink baseband functions are moved from the DU to the RU for implementation. Different split manners between the DU and the RU correspond to different categories (category, Cat for short) of eCPRIs. FIG. 2D provides six examples of the eCPRI, which are represented by Cat A, B, C, D, E, and F (which may alternatively be represented as Options A to F, Options 1 to 6, or another manner). It may be understood that there may be another split manner between the DU and the RU, that is, there may be another category of eCPRI.

Using eCPRI Cat A as an example, for downlink transmission, layer mapping is used as a split. The DU is configured to implement layer mapping and one or more previous functions (that is, one or more of encoding, rate matching, scrambling, modulation, and layer mapping), and another function (for example, RE mapping, digital BF, or IFFT/CP addition) after layer mapping is moved to the RU for implementation. For uplink transmission, RE demapping is used as a split. The DU is configured to implement demapping and one or more previous functions (that is, one or more of decoding, de-rate matching, descrambling, demodulation, IDFT, channel equalization, and RE demapping), and another function (for example, one or more of digital BF or FFT/CP removal) after demapping is moved to the RU for implementation.

Similarly, eCPRI Cat B, Cat C, Cat D, Cat E, and Cat F correspond to different split manners between the DU and the RU. A split point and a function before the split point are implemented by the DU, and a function after the split point is implemented by the RU. For split points of various types of eCPRIs, refer to FIG. 2D, and details are not described one by one. For example, for eCPRI Cat B, RE mapping is used as a split for downlink transmission, and RE demapping is used as a split for uplink transmission. For uplink transmission, RE mapping and a function before RE mapping are implemented by the DU, and a function after RE mapping and a radio frequency function are implemented by the RU. For downlink transmission, RE demapping and a function before RE demapping are implemented by the DU, and a function after RE demapping and a radio frequency function are implemented by the RU.

Split manners of eCPRIs may be symmetric for uplink and downlink, for example, eCPRI Cat B and Cat C shown in FIG. 2D; or split manners of eCPRIs may be asymmetric for uplink and downlink, for example, eCPRI Cat A, Cat D, Cat E, and Cat F shown in FIG. 2D, which is not limited. Optionally, for uplink and/or downlink, different split manners may be configured for different channels or different channel groups, that is, different categories of eCPRIs are configured. One group of channels may include one or more channels.

In a possible implementation, the CU and the DU are included in a same network element, for example, a baseband unit (baseband unit, BBU). The RU may be included in a radio frequency device (or referred to as a radio frequency unit), for example, the radio frequency device may be a remote radio unit (remote radio unit, RRU), an active antenna unit (active antenna unit, AAU), or a remote radio head (remote radio head, RRH). A processing unit in the BBU and configured to implement a baseband function is referred to as a base band high (base band high, BBH) unit, and a processing unit in the RRU/AAU/RRH and configured to implement a baseband function is referred to as a base band low (base band low, BBL) unit.

The BBU and the radio frequency device may be integrated in one cabinet; or the BBU and the radio frequency device may be separated. For example, the BBU is installed in a cabinet, and the radio frequency device is deployed at a remote end, for example, in a place where signal coverage is required. An access network device in which the BBU and the radio frequency device are separated may be understood as a distributed access network device, or referred to as a distributed base station.

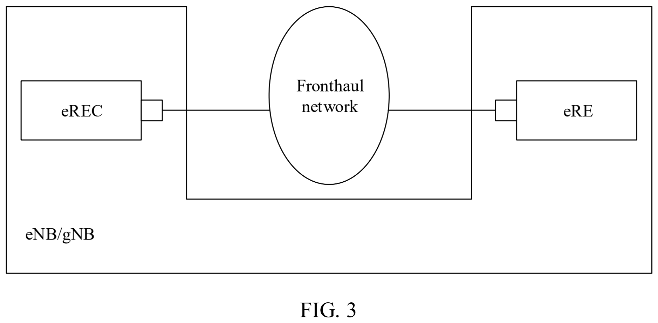

An interface between the BBU and the radio frequency device may alternatively be referred to as a fronthaul interface. To implement a fronthaul interface, the DU and the RU may be connected by using a fronthaul network, or the BBU and the radio frequency device may be connected by using a fronthaul network (fronthaul network). For example, the fronthaul network includes but is not limited to a fiber direct connection and a wavelength division network. From a perspective of a radio frequency device, the BBU may alternatively be described as a radio frequency control device. One end of the fronthaul interface is the radio frequency control device, and the other end is the radio frequency device. The radio frequency control device and the radio frequency device may alternatively be named according to a communication protocol of the fronthaul interface. For example, as shown in FIG. 3, when the communication protocol of the fronthaul interface is an eCPRI protocol, the radio frequency control device may be eCPRI radio equipment control (eCPRI radio equipment control, eREC), and the radio frequency device may be eCPRI radio equipment (eCPRI radio equipment, eRE). For another example, in an ORAN system, the radio frequency control device may be a DU, a CU, or a BBU, and the radio frequency device may be an RU, an RRU, an AAU, or an RRH. In this embodiment of this application, the BBU and the radio frequency device are used as an example for description.

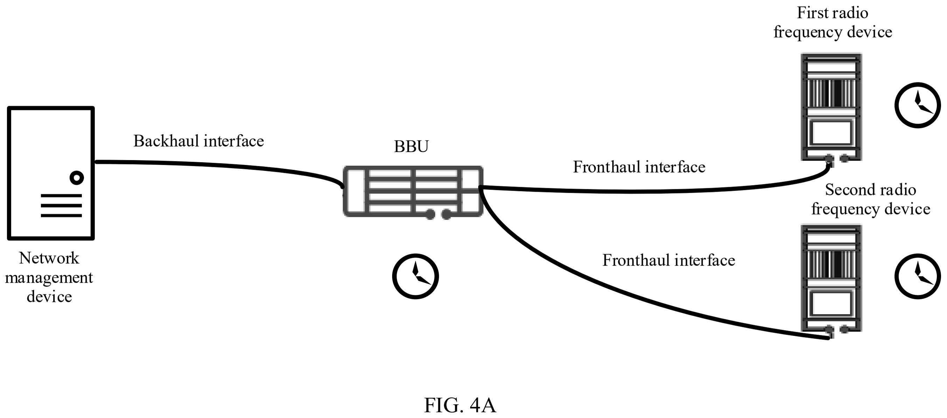

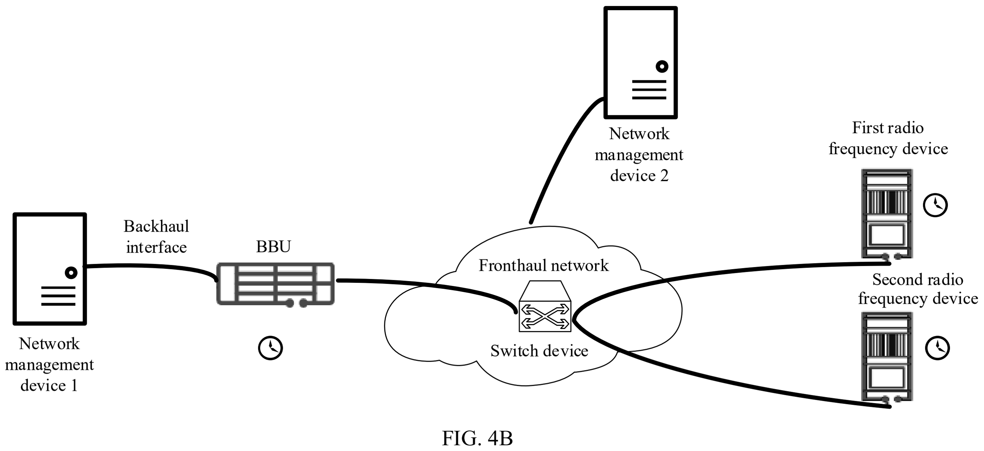

In a distributed base station, one BBU may be connected to a plurality of radio frequency devices, and fronthaul interfaces between different radio frequency devices and the BBU correspond to different transmission paths. In an optional implementation, the BBU may be directly connected to at least one of a plurality of radio frequency devices by using a transmission medium such as an optical fiber (optical cable) or an electrical cable. As shown in FIG. 4A, a distributed base station includes one BBU and two radio frequency devices, that is, a first radio frequency device and a second radio frequency device. The BBU and the two radio frequency devices may be connected by using different optical fibers. In another optional implementation, the BBU and the radio frequency device may be alternatively connected to each other by using a fronthaul network (fronthaul network) including one or more switch devices. Such a fronthaul network may alternatively be referred to as fronthaul networking. A single radio frequency device may be connected to the BBU by using a one-hop or multi-hop switch device. Switch devices connected between different radio frequency devices and the BBU may be the same or different. For example, as shown in FIG. 4B, a distributed base station includes one BBU and two radio frequency devices, that is, a first radio frequency device and a second radio frequency device. The BBU is connected to a switch device in a fronthaul network by using an optical fiber, and the two radio frequency devices are connected to switch devices in the fronthaul network by using optical fibers.

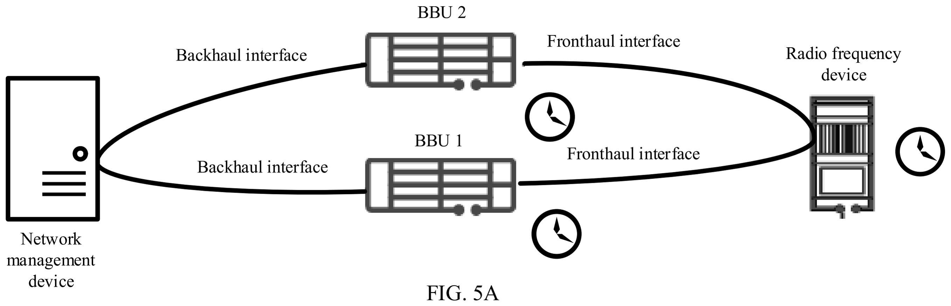

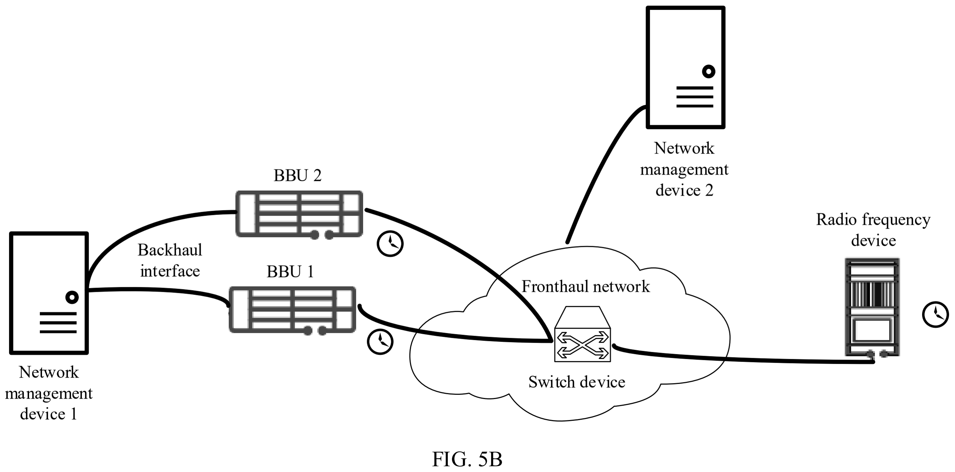

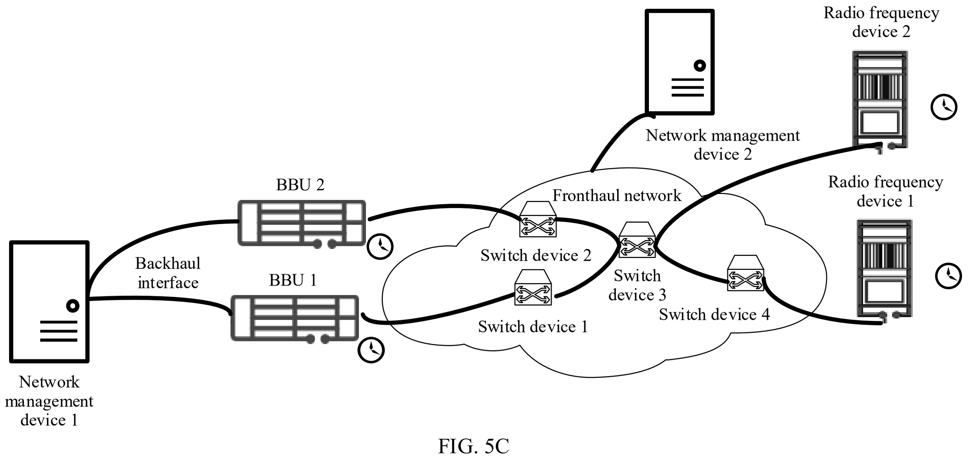

Based on requirements such as resource multiplexing and reliability, a plurality of BBUs may sometimes access a same fronthaul network. In other words, one radio frequency device may be connected to a plurality of BBUs. For example, FIG. 5A shows a distributed base station, and shows one radio frequency device and two BBUs, to be specific, a BBU 1 and a BBU 2. The radio frequency device may be connected to the two BBUs by using different optical fibers. For example, FIG. 5B shows another distributed base station, and shows a BBU 1, a BBU 2, and a radio frequency device. The BBU 1 and the BBU 2 access a fronthaul network including a switch device, and the radio frequency device 1 and the radio frequency device 2 also access the fronthaul network. For another example, FIG. 5C shows still another distributed base station, including a BBU 1, a BBU 2, a radio frequency device 1, and a radio frequency device 2. The BBU 1 and the BBU 2 access a fronthaul network including a switch device, and the radio frequency device 1 and the radio frequency device 2 also access the fronthaul network. The fronthaul network includes switch devices 1, 2, 3, and 4. The BBU 1 is indirectly connected to the switch device 3 by using the switch device 1, the BBU 2 is indirectly connected to the switch device 3 by using the switch device 2, the radio frequency device 1 is indirectly connected to the switch device 3 by using the switch device 4, and the radio frequency device 2 is directly connected to the switch device 3.

In addition, FIG. 4A, FIG. 4B, FIG. 5A, FIG. 5B, and FIG. 5C further show that the BBU may be connected to a network management device, and an interface between the network management device and the BBU may be referred to as a backhaul interface. Optionally, the fronthaul network shown in FIG. 4B, FIG. 5B, and FIG. 5C may further be connected to an additional network management device, and the additional network management device may manage the switch device in the fronthaul network. For differentiation, in FIG. 4B, FIG. 5B, and FIG. 5C, the network management device connected to the BBU by using the backhaul interface is denoted as a network management device 1, and the additional network management device connected to the fronthaul network is denoted as a network management device 2.

The BBU provides a clock source for a plurality of connected radio frequency devices through fronthaul interfaces. The radio frequency devices maintain clock or time synchronization with the BBU. Clock synchronization, also referred to as frequency synchronization, means maintaining a strict specific relationship between frequencies or phases of signals. For example, a signal appears at a same average rate at a corresponding effective moment or effective time period, so as to maintain that all devices in a communication network run at a same rate. For example, that the radio frequency device keeps clock synchronization with the BBU may be understood as that a local clock of the radio frequency device traces a clock source (that is, a clock of the BBU) to achieve frequency synchronization, and transmit/receive clocks of the radio frequency device and the BBU are synchronous. Time synchronization, also referred to as phase synchronization, means that frequencies and phases of signals are consistent. For example, that the radio frequency device keeps time synchronization with the BBU may be understood as that a local clock of the radio frequency device traces a clock source (that is, a clock of the BBU) to achieve phase synchronization.

When a plurality of BBUs are connected to a same fronthaul network, the radio frequency device keeps time synchronization with one BBU of the plurality of BBUs. As shown in FIG. 5A, the radio frequency device may select a clock source 1 provided by the BBU 1 or a clock source 2 provided by the BBU 2 to perform time synchronization. As shown in FIG. 5B, the switch device in the fronthaul network may select, for all radio frequency devices connected to the fronthaul network, a clock source provided by a same BBU (for example, the BBU 1) to perform time synchronization, or the switch device in the fronthaul network may select, for the radio frequency device 1, a clock source 1 provided by the BBU 1 to perform time synchronization; and select, for the radio frequency device 2, a clock source 2 provided by the BBU 2 to perform time synchronization. As shown in FIG. 5C, the switch device 3 in the fronthaul network may select, for all radio frequency devices connected to the fronthaul network, a clock source provided by a same BBU (for example, the BBU 1) to perform time synchronization, or the switch device 3 in the fronthaul network may select, for the radio frequency device 1, a clock source 1 provided by the BBU 1 to perform time synchronization; and select, for the radio frequency device 2, a clock source 2 provided by the BBU 2 to perform time synchronization.

It may be understood that, two BBUs are shown as an example in FIG. 5A, FIG. 5B, and FIG. 5C. The plurality of BBUs in this embodiment of this application may alternatively be more than two BBUs. For example, two BBUs are shown as an example in FIG. 5A, FIG. 5B, and FIG. 5C. The plurality of BBUs in this embodiment of this application may alternatively be more than two BBUs. For example, two BBUs are shown as an example in FIG. 5A, FIG. 5B, and FIG. 5C. The plurality of BBUs in this embodiment of this application may alternatively be more than two BBUs. For example, in FIG. 5A, in addition to the BBU 1 and the BBU 2, a BBU 3, a BBU 4, ..., and the like may be further included. This is not limited in embodiments of this application.

Generally, after the clock source 1 and the clock source 2 are synchronized by using an external clock reference source, the clock source 1 and the clock source 2 are also time synchronized, or the BBU 1 and the BBU 2 are time synchronized, and synchronization precision required by a service can be achieved. For example, if a difference between each of the clock source 1 and the clock source 2 and same reference time is within an expected indicator (for example, ±1100 ns), synchronization between the clock source 1 and the clock source 2 can be implemented. The reference time may be universal time coordinated (universal time coordinated, UTC). In this case, for data transmission between the BBU in which the clock source 1/2 is located and a corresponding radio frequency device, a latency obtained based on respective local time can meet a latency requirement required by the service.

However, because the clock source 1 and the clock source 2 are not a same clock source, an abnormality that a clock offset exceeds an expected indicator may occur. For example, jump occurs an external clock reference source corresponding to the clock source 2, and consequently the difference (for example, 100 ms) between the clock source 2 and the reference time exceeds the expected indicator, in other words, the clock source 1 and the clock source 2 are not time-synchronized, or the BBU 1 and the BBU 2 are not time-synchronized. In this case, if the radio frequency device 1 that keeps time synchronization with the BBU 1 communicates with the BBU 2, because the radio frequency device 1 and the BBU 2 are not time-synchronized, a communication latency has an offset, and the latency requirement required by the service cannot be met. Consequently, the service is abnormal.

Currently, for the foregoing service abnormality, a worker needs to carry a test device such as a time test instrument or a sweep generator to a site to detect a clock source of each BBU. If it is determined that a difference between a clock source of a BBU and reference time exceeds the expected indicator, it may be determined that the clock source of the BBU is abnormal, further, the BBU may be disconnected from the radio frequency device, and fault handling is performed on the BBU, so that after the difference between the clock source of the BBU and the reference time meets the expected indicator, the BBU is reconnected to the network to restore a related service. Such a design relies on a manual operation and a test device, resulting in high operation and maintenance costs, prolonged fault handling time, and low efficiency.

Based on this, an embodiment of this application provides a communication method. When a plurality of BBUs access a same fronthaul network, a radio frequency device or a switch device in the fronthaul network may determine a clock offset between clock sources of different BBUs. The communication method is applied to the foregoing distributed base station, and fault handling, for example, including processing operations such as fault determining (or troubleshooting), fault isolation, and fault recovery, is performed on a related BBU based on the clock offset between clock sources of different BBUs. Manually carrying a test device is not required, which can reduce operation and maintenance costs and improve fault handling efficiency.

In an optional implementation, as shown in FIG. 5A, when the BBU is directly connected to the radio frequency device, the radio frequency device may select a clock source provided by one BBU of a plurality of BBUs, and determine time information synchronized through the BBU as time information of a local clock. The radio frequency device may calculate a clock offset between time information synchronized through a remaining BBU and the time information of the local clock, to determine a clock offset between the remaining BBU and the selected BBU.

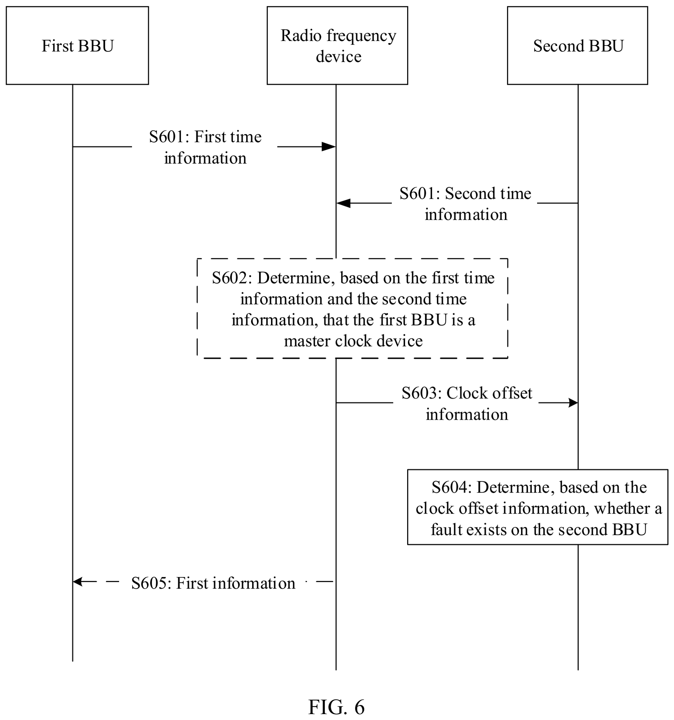

The following describes in detail a procedure of the communication method provided in this manner by using an example in which a first BBU represents the BBU that is selected by the radio frequency device and that provides the clock source, and a second BBU represents any BBU other than the selected BBU in a plurality of BBUs. As shown in FIG. 6, the communication method mainly includes the following steps.

S601: A radio frequency device obtains first time information and second time information.

The first time information is time information synchronized by the radio frequency device from a fronthaul interface corresponding to the first BBU. For example, the first BBU and the radio frequency device exchange a related synchronization packet through the fronthaul interface according to a synchronization protocol such as an Institute of Electrical and Electronics Engineers (institute of electrical and electronics engineers, IEEE) 1588 protocol (such as 1588 v2) or an IEEE 1588 protocol combined with a synchronous Ethernet (synchronous ethernet, SyncE) protocol, to perform time synchronization. Finally, the radio frequency device may obtain the first time information. For example, the first time information may include first absolute time accurate to second and a time phase within 1 second. Optionally, the first time information may alternatively be described as first clock synchronization phase information or another name. This is not limited in this embodiment of this application.

It may be understood that, in the IEEE 1588 protocol, the clock source provided by the first BBU may alternatively be described as a first master clock. Correspondingly, a first slave clock corresponding to the first master clock is deployed in the radio frequency device, and the first time information may be understood as time information of the first slave clock. The IEEE 1588 protocol may alternatively be referred to as a precision time protocol (precision time protocol, PTP). In the PTP protocol combined with the SyncE protocol, the first master clock may alternatively be described as a first SyncE+PTP master clock, and the first slave clock may alternatively be described as a first SyncE+PTP slave clock.

Similarly, the second time information is time information synchronized by the radio frequency device from a fronthaul interface corresponding to the second BBU. For example, the second BBU and the radio frequency device exchange a related synchronization packet through the fronthaul interface according to the IEEE 1588 protocol (such as 1588 v2) or the IEEE 1588 protocol combined with the synchronous Ethernet SyncE protocol, to perform time synchronization. Finally, the radio frequency device may obtain the second time information. For example, the second time information may include second absolute time accurate to second and a time phase within 1 second. Optionally, the second time information may alternatively be described as second clock synchronization phase information or another name. This is not limited in this embodiment of this application.

It may be understood that, in the IEEE 1588 protocol, the clock source provided by the second BBU may alternatively be described as a second master clock. Correspondingly, a second slave clock corresponding to the second master clock is deployed in the radio frequency device, and the second time information may be understood as time information of the second slave clock. The IEEE 1588 protocol may alternatively be referred to as a precision time protocol (precision time protocol, PTP). In the PTP protocol combined with the SyncE protocol, the second master clock may alternatively be described as a second SyncE+PTP master clock, and the second slave clock may alternatively be described as a second SyncE+PTP slave clock.

Optionally, the first BBU is time-synchronized with a first external clock reference source, to be specific, the clock source (or referred to as the first master clock) provided by the first BBU is synchronized with the first external clock reference source. The second BBU is time-synchronized with a second external reference source, to be specific, the clock source (or referred to as the second master clock) provided by the second BBU is synchronized with the second external clock reference source. The first external clock reference source and the second external clock reference source may be the same or different. For example, the external clock reference source in this embodiment of this application may be a global navigation satellite system (global navigation satellite system, GNSS) clock or a 1588V2 PTP clock.

The radio frequency device in this embodiment of this application represents a general concept. For example, when there are a plurality of radio frequency devices accessing a same fronthaul network, the radio frequency device described in this embodiment of this application may be any one of the plurality of radio frequency devices.

S602: The radio frequency device determines, based on the first time information and the second time information, that the first BBU is a master clock device.

Optionally, the radio frequency device may select, according to a best master clock algorithm (best master clock algorithm, BMCA), one piece of time information from time information separately synchronized through a plurality of BBUs as the time information of the local clock of the radio frequency device. A BBU corresponding to the selected time information may be referred to as a master clock device, or referred to as a primary BBU. The local clock of the radio frequency device may alternatively be described as a system clock of the radio frequency device or another name. This is not limited in this embodiment of this application.

For example, corresponding to the solution described in S601, when the radio frequency device uses, according to the BMCA algorithm, the first time information synchronized through the first BBU as the time information of the local clock of the radio frequency device, the radio frequency device may determine the first BBU as the master clock device. Optionally, when the radio frequency device performs time synchronization with the first BBU according to the IEEE 1588 protocol, it may also be understood that the radio frequency device determines the first slave clock as the local clock of the radio frequency device according to the BMCA algorithm.

In addition, optionally, the first BBU may be configured as the master clock device in a predefined manner. In this case, the radio frequency device may not need to perform S602. In other words, S602 is an optional step, and S602 is shown by using a dashed line in FIG. 6.

S603: The radio frequency device sends clock offset information to the second BBU.

The clock offset information indicates an offset between the first time information and the second time information. Optionally, corresponding to the description in S601, the offset between the first time information and the second time information may include two parts: an offset between the first absolute time and the second absolute time, and an offset between time phases within 1 second.

For example, the first absolute time is denoted as t1, the second absolute time is denoted as t2, and the offset between the first absolute time and the second absolute time is a difference between t1 and t2. The offset between the time phases within 1 second may be calculated by using a phase discrimination function. For example, the phase discrimination function is implemented as a phase discriminator, and the phase discriminator is a component, a functional circuit, or a software component that can discriminate a phase difference between two input signals. The radio frequency device inputs the time phase within 1 second included in the first time information and the time phase within 1 second included in the second time information into the phase discriminator, an output of the phase discriminator is the offset between the time phase within 1 second included in the first time information and the time phase within 1 second included in the second time information.

It may be understood that, corresponding to that the radio frequency device selects the first BBU as the primary BBU, the second BBU is a non-primary BBU, and the first time information synchronized through the first BBU is used as the time information of the local clock of the radio frequency device, the clock offset information may also be understood as an offset between time information synchronized through the non-primary BBU and the time information of the local clock, or a clock offset between the non-primary BBU and the radio frequency device.

Correspondingly, that the second BBU receives the clock offset information from the radio frequency device may alternatively be described as that the second BBU receives, from the radio frequency device, the clock offset information.

In this application, "sending information (for example, the clock offset information) to a device (for example, the second BBU)" may be understood as that a destination end of the information is the device. "Sending information (for example, the clock offset information) to a device (for example, the second BBU)" may include directly or indirectly sending the information to the device. Necessary processing, such as format change or frequency conversion, may be performed on information between a source end and a destination end of information transmission, but the destination end may understand valid information from the source end. Similar descriptions in this application may be understood similarly, and details are not described herein.

In this application, "... receiving information from a device (for example, the first radio frequency device)" or "receiving information from a device (for example, the first radio frequency device)" may be understood as that a source end of the information is the device. "... receiving information from a device (for example, the first radio frequency device)" or "receiving information from a device (for example, the first radio frequency device)" may include directly or indirectly receiving the information from the device. Necessary processing, such as format change or frequency conversion, may be performed on information between a source end and a destination end of information transmission, but the destination end may understand valid information from the source end. Similar descriptions in this application may be understood similarly, and details are not described herein.

S604: The second BBU determines, based on the clock offset information, whether a fault exists on the second BBU.

For example, when the clock offset information is greater than a preset clock offset information threshold, the second BBU may determine that a fault exists on the second BBU. In this case, the second BBU may use a fault isolation manner, for example, disconnect from the radio frequency device, to avoid interference caused by communication between the second BBU and the radio frequency device to communication between other devices such as communication between the radio frequency device and the first BBU. The second BBU may further report an abnormality to an administrator or a system, and corresponding fault handling is manually performed or automatically performed by the system, for example, troubleshooting, fault isolation, and fault recovery. When the second BBU recovers from the fault, the second BBU may re-establish a connection to the radio frequency device, to access the radio frequency device.

For another example, when the clock offset information is less than or equal to the preset clock offset information threshold, the second BBU may determine that no fault exists on the second BBU, and does not need to perform abnormality reporting or the like.

In addition, optionally, the radio frequency device may alternatively send the clock offset information to a network management device, for example, a network management device corresponding to a backhaul interface, for example, the network management device in FIG. 5A. In this embodiment of this application, there may be two or more BBUs connected to a same radio frequency device. As described above, the second BBU is any BBU of the remaining BBUs other than the master clock device (the first BBU) in the plurality of BBUs, and the network management device receives clock offset information between each BBU of the remaining BBUs and the master clock device, alternatively, it is described as that the network management device may receive clock offset information respectively corresponding to the remaining BBUs. In a possible case, clock offset information corresponding to most (for example, exceeding a specified proportion) BBUs of the remaining BBUs is greater than the preset clock offset information threshold. In this case, the network management device may further determine whether the first BBU is faulty, and perform corresponding fault handling.

For the first BBU used as the master clock device, the radio frequency device may not report the clock offset information. Alternatively, optionally, as shown in FIG. 6, the radio frequency device may further perform S605.

S605: The radio frequency device sends first information to the first BBU.

The first information may indicate one or more of the following: The first BBU is a master clock device, and a clock offset between the first BBU and the master clock device is zero. The first BBU may determine, based on the first information, that the first BBU is the master clock device.

In the foregoing manner provided in this embodiment of this application, the radio frequency device can automatically obtain the clock offset between the non-primary BBU and the radio frequency device. This helps quickly implement measures such as fault isolation, and avoid a service abnormality caused by clock asynchronization between the BBU and the radio frequency device. In addition, a manual operation and an additional test instrument are not required, which reduces operation and maintenance costs and improves fault handling efficiency.

In another optional implementation, when the BBU is indirectly connected to the radio frequency device by using the switch device in the fronthaul network, the switch device (for example, the switch device in FIG. 5B or the switch device 3 in FIG. 5C) may select time information of a clock source provided by one BBU of a plurality of BBUs, for example, determine time information synchronized through the BBU as time information of a local clock of the switch device. The switch device may calculate a clock offset between time information synchronized through a remaining BBU and the time information of the local clock, to determine a clock offset between the remaining BBU and the selected BBU.

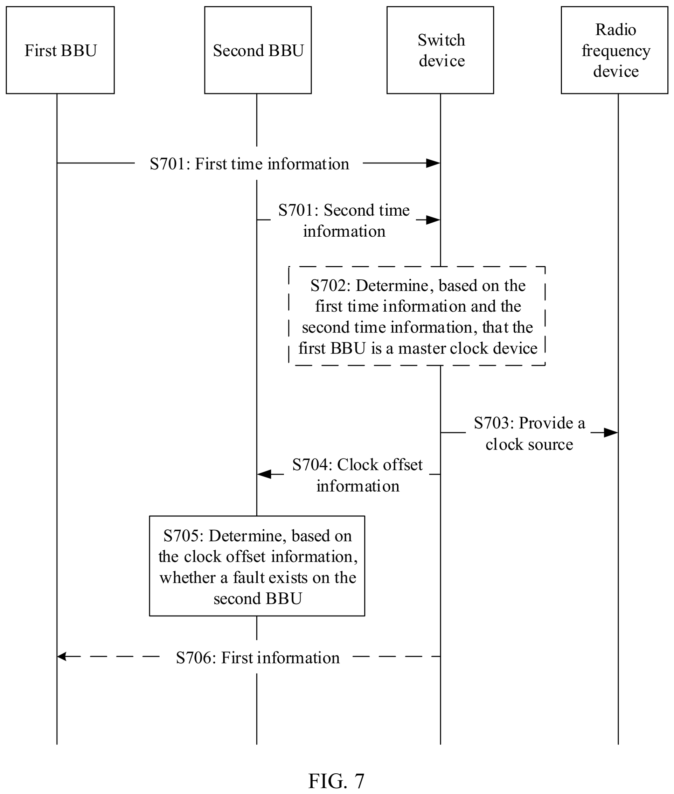

The following describes in detail a procedure of the communication method provided in this manner by using an example in which a first BBU represents the BBU that is selected by the switch device and that provides the clock source, and a second BBU represents any BBU other than the selected BBU in a plurality of BBUs. As shown in FIG. 7, the communication method mainly includes the following steps.

S701: A switch device in a fronthaul network obtains first time information and second time information.

The first time information is time information synchronized by the switch device from a fronthaul interface corresponding to the first BBU. For example, the first BBU and the switch device exchange a related synchronization packet through the fronthaul interface according to the IEEE 1588 protocol (such as 1588 v2) or the IEEE 1588 protocol combined with the SyncE protocol, to perform time synchronization. Finally, the switch device may obtain the first time information. For example, the first time information may include first absolute time accurate to second and a time phase within 1 second. Optionally, the first time information may alternatively be described as first clock synchronization phase information or another name. This is not limited in this embodiment of this application.

It may be understood that, in the IEEE 1588 protocol, a clock source provided by the first BBU may alternatively be described as a first master clock. Correspondingly, a first slave clock corresponding to the first master clock may be deployed in the switch device, and the first time information may be understood as time information of the first slave clock. The IEEE 1588 protocol may alternatively be referred to as a precision time protocol (precision time protocol, PTP). In the PTP protocol combined with the SyncE protocol, the first master clock may alternatively be described as a first SyncE+PTP master clock, and the first slave clock may alternatively be described as a first SyncE+PTP slave clock.

Similarly, the second time information is time information synchronized by the switch device from a fronthaul interface corresponding to the second BBU. For example, the second BBU and the switch device exchange a related synchronization packet through the fronthaul interface according to the IEEE 1588 protocol (such as 1588 v2) or the IEEE 1588 protocol combined with the synchronous Ethernet SyncE protocol, to perform time synchronization. Finally, the switch device may obtain the second time information. For example, the second time information may include second absolute time accurate to second and a time phase within 1 second. Optionally, the second time information may alternatively be described as second clock synchronization phase information or another name. This is not limited in this embodiment of this application.

It may be understood that, in the IEEE 1588 protocol, a clock source provided by the second BBU may alternatively be described as a second master clock. Correspondingly, a second slave clock corresponding to the second master clock may be deployed in the switch device, and the second time information may be understood as time information of the second slave clock. The IEEE 1588 protocol may alternatively be referred to as a precision time protocol (precision time protocol, PTP). In the PTP protocol combined with the SyncE protocol, the second master clock may alternatively be described as a second SyncE+PTP master clock, and the second slave clock may alternatively be described as a second SyncE+PTP slave clock.

Optionally, the first BBU is time-synchronized with a first external clock reference source, to be specific, the clock source (or referred to as the first master clock) provided by the first BBU is synchronized with the first external clock reference source. The second BBU is time-synchronized with a second external reference source, to be specific, the clock source (or referred to as the second master clock) provided by the second BBU is synchronized with the second external clock reference source. The first external clock reference source and the second external clock reference source may be the same or different. For example, the external clock reference source in this embodiment of this application may be a GNSS clock or a 1588V2 PTP clock.

S702: The switch device determines, based on the first time information and the second time information, that the first BBU is a master clock device.

Optionally, the switch device may select, according to a BMCA algorithm, one piece of time information from time information separately synchronized through a plurality of BBUs as the time information of the local clock of the switch device. A BBU corresponding to the selected time information may be referred to as a master clock device, or referred to as a primary BBU.

For example, corresponding to the solution described in S701, when the switch device uses, according to the BMCA, the first time information synchronized through the first BBU as the time information of the local clock of the switch device, the switch device may determine the first BBU as the master clock device. Optionally, when the switch device performs time synchronization with the first BBU according to the IEEE 1588 protocol, it may also be understood that the switch device determines the first slave clock as the local clock of the switch device according to the BMCA. Optionally, the local clock of the switch device may alternatively be described as a system clock of the switch device or another name. This is not limited in this embodiment of this application.

In addition, optionally, the first BBU may be configured as the master clock device in a predefined manner. In this case, the switch device may not need to perform S702. In other words, S702 is an optional step, and S702 is shown by using a dashed line in FIG. 7.

S703: The switch device provides a clock source for a radio frequency device based on the first time information.

The radio frequency device communicates with the first BBU and the second BBU.

Corresponding to the description in S702, when the switch device uses the first time information as the time information of the local clock of the switch device according to the BMCA, the switch device may provide the clock source for the radio frequency device based on the first time information, to implement synchronization between the radio frequency device and the first BBU. For example, the switch device and the radio frequency device exchange a related synchronization packet through the fronthaul interface according to a synchronization protocol such as the IEEE 1588 protocol (for example, 1588 v2) or the IEEE 1588 protocol combined with the synchronous Ethernet SyncE protocol, to perform time synchronization. Finally, the radio frequency device may obtain third time information synchronized through the switch device. For example, the third time information may include third absolute time accurate to second and a time phase within 1 second. Optionally, the third time information may alternatively be described as third clock synchronization phase information or another name. This is not limited in this embodiment of this application.

In the IEEE 1588 protocol, for the radio frequency device, the local clock of the switch device may be considered as a master clock that provides a clock source for the radio frequency device. For differentiation, in this embodiment of this application, the master clock that provides the clock source for the radio frequency device is denoted as a third master clock in the following.

A third slave clock corresponding to the third master clock may be deployed in the radio frequency device, and the third time information may be understood as time information of the third slave clock. The IEEE 1588 protocol may alternatively be referred to as a precision time protocol (precision time protocol, PTP). In the PTP protocol combined with the SyncE protocol, the third master clock may alternatively be described as a third SyncE+PTP master clock, and the third slave clock may alternatively be described as a third SyncE+PTP slave clock.

S704: The switch device sends clock offset information to the second BBU.

For implementation of this step, refer to S603. Details are not described in this embodiment of this application.

In addition, optionally, the switch device may alternatively send the clock offset information to a network management device. The network management device may be a network management device corresponding to a backhaul interface, for example, the network management device 1 in FIG. 5B/FIG. 5C, or the network management device may be a network management device corresponding to a fronthaul network, for example, the network management device 2 in FIG. 5B/FIG. 5C. In this embodiment of this application, there may be two or more BBUs connected to a same radio frequency device. As described above, the second BBU is any BBU of the remaining BBUs other than the master clock device (the first BBU) in the plurality of BBUs, and the network management device receives clock offset information between each BBU of the remaining BBUs and the master clock device, alternatively, it is described as that the network management device may receive clock offset information respectively corresponding to the remaining BBUs. In a possible case, clock offset information corresponding to most (for example, exceeding a specified proportion) BBUs of the remaining BBUs is greater than the preset clock offset information threshold. In this case, the network management device may further determine whether the first BBU is faulty, and perform corresponding fault handling.

S705: The second BBU determines, based on the clock offset information, whether a fault exists on the second BBU.

For implementation of this step, refer to S604. Details are not described in this embodiment of this application.

For the first BBU used as the master clock device, the switch device may not report the clock offset information. Alternatively, optionally, as shown in FIG. 7, the switch device may further perform S706.

S706: The switch device sends first information to the first BBU.

For implementation of this step, refer to S605. Details are not described in this embodiment of this application.

The foregoing manner provided in this embodiment of this application is applied to a fronthaul networking scenario, so that a problem of a synchronization abnormality between a plurality of BBUs and a radio frequency device can be automatically monitored, and measures such as fault isolation can be quickly implemented, to avoid a service abnormality caused by clock asynchronization. In addition, a manual operation and an additional test instrument are not required, which reduces operation and maintenance costs and improves fault handling efficiency.

It may be understood that the communication method provided in this embodiment of this application may be further used for fault handling corresponding to a fronthaul interface in another scenario, for example, used for fault handling on a distributed unit (distributed unit, DU) on a fronthaul interface between the DU and a radio unit (radio unit, RU) in an O-RAN system.

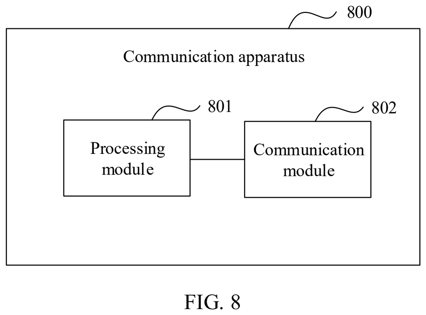

Based on a same idea, refer to FIG. 8. An embodiment of this application provides a communication apparatus 800. The communication apparatus 800 includes a processing module 801 and a communication module 802. The communication apparatus 800 may be a BBU, or may be an apparatus that is applied to the BBU or that is used in a matching manner with the BBU and that can implement a method performed on a BBU side. The communication apparatus 800 may alternatively be a switch device, or may be an apparatus that is applied to the switch device or that is used in a matching manner with the switch device and that can implement a method performed on a switch device side. The communication apparatus 800 may alternatively be a radio frequency device, or may be an apparatus that is applied to the radio frequency device or that is used in a matching manner with the radio frequency device and that can implement a method performed on a radio frequency device side.

The communication module may alternatively be referred to as a transceiver module, a transceiver, a transceiver device, a transceiver apparatus, or the like. The processing module may alternatively be referred to as a processor, a processing board, a processing unit, a processing apparatus, or the like. Optionally, the processing module may control the communication module to perform a sending operation and a receiving operation of the BBU, the switch device, or the radio frequency device in the foregoing method.

It should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module and/or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely division into logical functions, and may be other division during actual implementation. In addition, functional modules in examples of embodiments of this application may be integrated into one processor, each of the functional modules may exist alone physically, or two or more functional modules may be integrated into one module. The integrated module may be implemented in a form of hardware, or may be implemented in a form of a software functional module.

In this embodiment of this application, functions of a processing module and/or a communication module in the BBU, the switch device, or the radio frequency device are further divided.

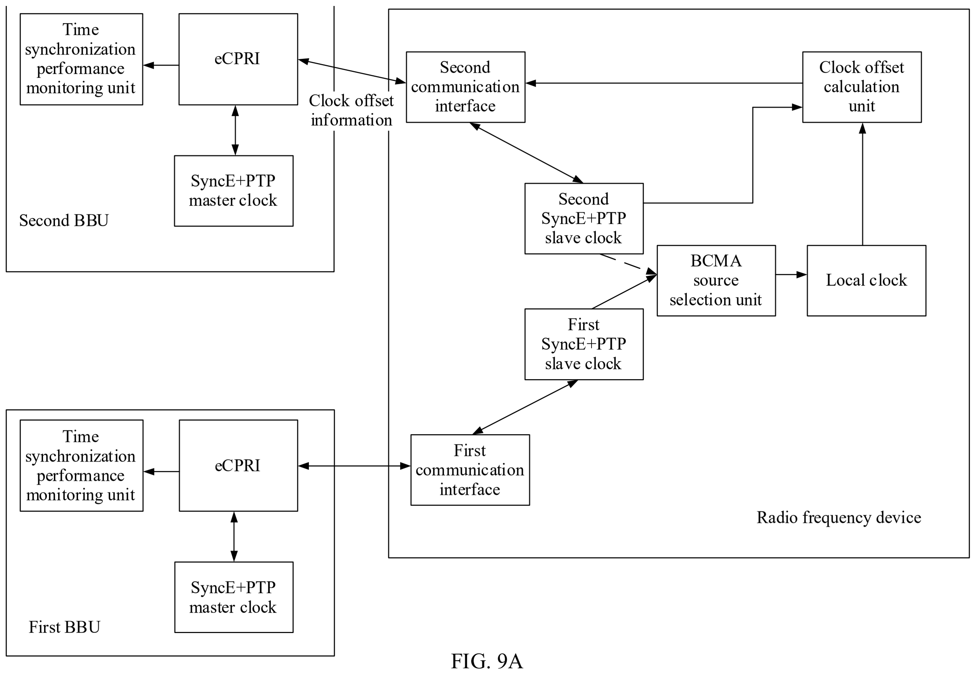

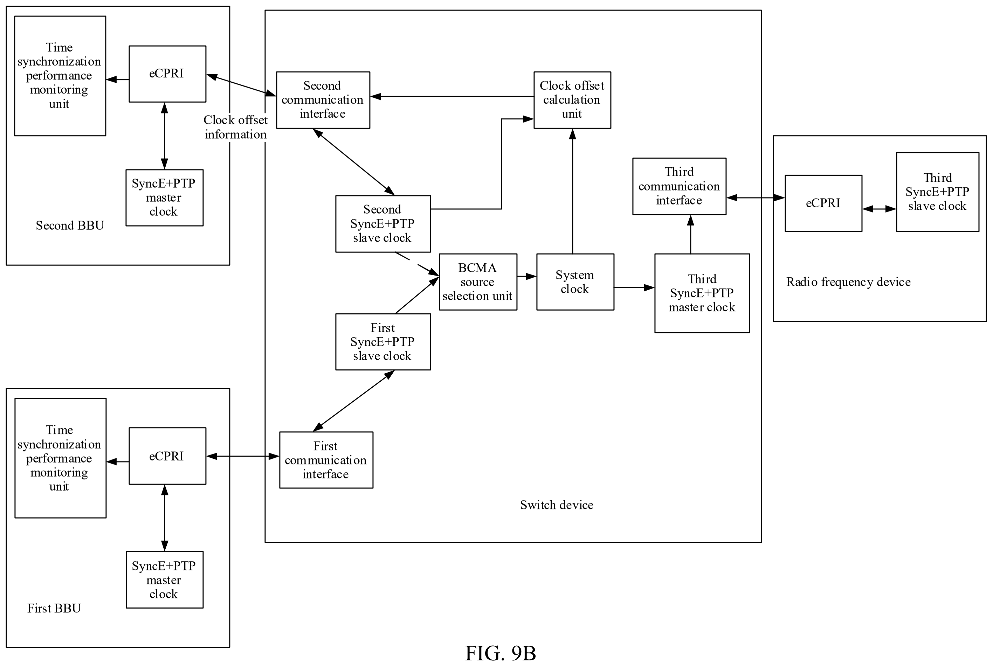

The communication module (shown by using an eCPRI as an example in FIG. 9A or FIG. 9B) in the first BBU or the second BBU corresponds to a fronthaul interface, and is configured to exchange, with the switch device or the radio frequency device, synchronization packets corresponding to the IEEE 1588 protocol and the SyncE protocol. An eCPRI of the first BBU sends a synchronization packet provided by a first SyncE+PTP master clock, and receives a packet fed back by a first SyncE+PTP slave clock from the fronthaul interface. An eCPRI of the second BBU sends a synchronization packet provided by a second SyncE+PTP master clock, and receives a packet fed back by a second SyncE+PTP slave clock from the fronthaul interface.

The processing module in the first BBU or the second BBU includes a time synchronization performance monitoring unit. Corresponding to the foregoing embodiment, the eCPRI in the second BBU is further configured to: receive clock offset information sent by the switch device or the radio frequency device, and send the clock offset information to the time synchronization performance monitoring unit. The time synchronization performance monitoring unit is configured to perform fault handling on the second BBU based on the clock offset information. It may be understood that the time synchronization performance monitoring unit may alternatively be deployed in another device, for example, a network management device corresponding to a fronthaul network or a network management device corresponding to a backhaul interface. Details are not described in this embodiment of this application.

FIG. 9A shows internal structures of the first BBU, the second BBU, and the radio frequency device in the solution described in FIG. 6. The first BBU, the second BBU, and the radio frequency device exchange synchronization packets corresponding to the IEEE 1588 protocol and the SyncE protocol. The communication module in the radio frequency device includes a first communication interface communicating with the first BBU and a second communication interface communicating with the second BBU. The second communication interface exchanges synchronization packets corresponding to the IEEE 1588 protocol and the SyncE protocol with the radio frequency device. The first communication interface is implemented by using a first eCPRI. The first eCPRI in the radio frequency device transfers a received synchronization packet to the first SyncE+PTP slave clock, and outputs a packet fed back by the first SyncE+PTP slave clock to the fronthaul interface. After interaction and synchronization according to the IEEE 1588 protocol and the SyncE protocol, the first SyncE+PTP slave clock outputs first time information. The second communication interface is implemented by using a second eCPRI. The second eCPRI in the radio frequency device transfers a received synchronization packet to the second SyncE+PTP slave clock, and outputs a packet fed back by the second SyncE+PTP slave clock to the fronthaul interface. After interaction and synchronization according to the IEEE 1588 protocol and the SyncE protocol, the second SyncE+PTP slave clock outputs second time information.

The processing module in the radio frequency device includes a BCMA source selection unit and a clock offset calculation unit. The BCMA source selection unit is configured to select one of the first SyncE+PTP slave clock and the second SyncE+PTP slave clock as a local clock. FIG. 9A shows that the BCMA source selection unit selects the first SyncE+PTP slave clock as the local clock.

Further, time information (namely, the first time information) of the local clock is used as one input to the clock offset calculation unit, and the second time information is used as another input to the clock offset calculation unit. The clock offset calculation unit may directly calculate an offset between first absolute time included in the first time information and second absolute time included in the second time information. In addition, the clock offset calculation unit determines, by using a phase discriminator, an offset between a time phase within 1 second included in the first time information and a time phase within 1 second included in the second time information. The second eCPRI of the radio frequency device reports clock offset information, namely, an offset between the first time information and the second time information, to the second BBU.

FIG. 9B shows internal structures of the first BBU, the second BBU, the switch device, and the radio frequency device in the solution described in FIG. 7. The first BBU, the second BBU, and the switch device exchange synchronization packets corresponding to the IEEE 1588 protocol and the SyncE protocol. The communication module in the switch device includes a first communication interface (or referred to as a first transmission interface) communicating with the first BBU and a second communication interface (or referred to as a second transmission interface) communicating with the second BBU. The second communication interface exchanges synchronization packets corresponding to the IEEE 1588 protocol and the SyncE protocol with the radio frequency device. The first communication interface in the switch device transfers a received synchronization packet to the first SyncE+PTP slave clock, and sends a packet fed back by the first SyncE+PTP slave clock to the eCPRI of the first BBU. After interaction and synchronization according to the IEEE 1588 protocol and the SyncE protocol, the first SyncE+PTP slave clock outputs first time information. The second communication interface in the switch device transfers a received synchronization packet to the second SyncE+PTP slave clock, and sends a packet fed back by the second SyncE+PTP slave clock to the eCPRI of the second BBU. After interaction and synchronization according to the IEEE 1588 protocol and the SyncE protocol, the second SyncE+PTP slave clock outputs second time information.

The processing module in the switch device includes a BCMA source selection unit and a clock offset calculation unit. The BCMA source selection unit is configured to select one of the first SyncE+PTP slave clock and the second SyncE+PTP slave clock as a system clock. FIG. 9B shows that the BCMA source selection unit selects the first SyncE+PTP slave clock as the system clock.

Further, time information (namely, the first time information) of the system clock is used as one input to the clock offset calculation unit, and the second time information is used as another input to the clock offset calculation unit. The clock offset calculation unit may directly calculate an offset between first absolute time included in the first time information and second absolute time included in the second time information. In addition, the clock offset calculation unit determines, by using a phase discriminator, an offset between a time phase within 1 second included in the first time information and a time phase within 1 second included in the second time information. The second communication interface of the switch device reports clock offset information, namely, an offset between the first time information and the second time information, to the second BBU.

In addition, the communication module of the switch device may further include a third communication interface. After the switch device determines the system clock, the system clock may be used as a third SyncE+PTP master clock corresponding to the radio frequency device. The third communication interface exchanges synchronization packets corresponding to the IEEE 1588 protocol and the SyncE protocol with the radio frequency device. The communication module (for example, implemented by using an eCPRI) in the radio frequency device transfers a received synchronization packet to the third SyncE+PTP slave clock, and sends a packet fed back by the third SyncE+PTP slave clock to the third communication interface of the switch device. After interaction and synchronization according to the IEEE 1588 protocol and the SyncE protocol, the third SyncE+PTP slave clock in the radio frequency device may output third time information.

It may be understood that there may be one or more radio frequency devices in FIG. 9B. The switch device may select a same master clock source or different master clock sources for different radio frequency devices. FIG. 9B shows only one radio frequency device as an example.

Based on a same technical concept, an embodiment of this application further provides a communication apparatus 1000. For example, the communication apparatus 1000 may be a chip or a chip system. Optionally, in this embodiment of this application, the chip system may include a chip, or may include a chip and another discrete device.

The communication apparatus 1000 may include at least one processor 1010. Optionally, the processor 1010 is coupled to a memory. The memory may be located in the apparatus. Alternatively, the memory may be integrated with the processor. Alternatively, the memory may be located outside the apparatus. For example, the communication apparatus 1000 may further include at least one memory 1020.

The processor 1010 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. For example, the processor 1010 may be a baseband processor or a central processing unit. The baseband processor may be configured to process a communication protocol and communication data. The central processing unit may be configured to: control a communication apparatus (for example, a radio frequency control device, a radio frequency device, a RAN node, a terminal, or a chip), execute a software program, and process data of the software program.

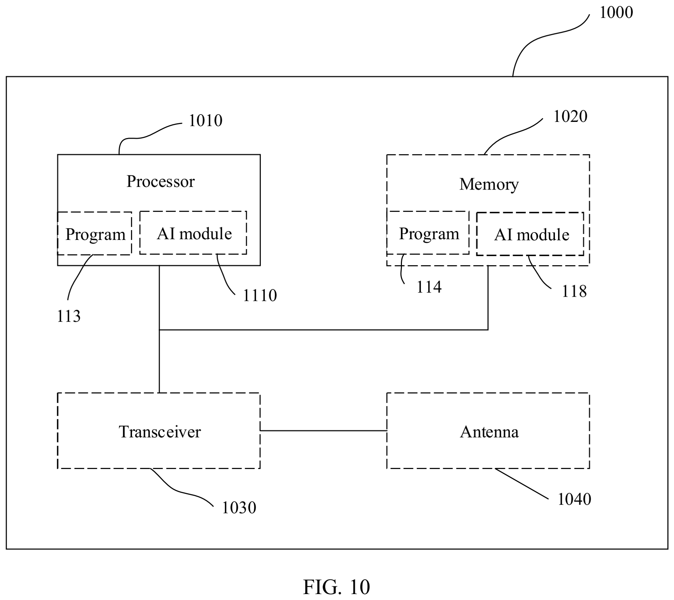

The communication apparatus 1000 is applied to the foregoing radio frequency device. In a design, the processor 1010 may include a program 113 (which may alternatively be referred to as code or an instruction sometimes). The program 113 may be run on the processor 1010, so that the communication apparatus 1000 performs the method on the radio frequency device side in the foregoing embodiments. In another possible design, the communication apparatus 1000 includes a circuit (not shown in FIG. 10), and the circuit is configured to implement a function on the radio frequency device side in the foregoing embodiments. Optionally, the processor 1010 may further store data.

The communication apparatus 1000 is applied to the foregoing switch device. In a design, the processor 1010 may include a program 113 (which may alternatively be referred to as code or an instruction sometimes). The program 113 may be run on the processor 1010, so that the communication apparatus 1000 performs the method on the switch device side in the foregoing embodiments. In another possible design, the communication apparatus 1000 includes a circuit (not shown in FIG. 10), and the circuit is configured to implement a function on the switch device side in the foregoing embodiments. Optionally, the processor 1010 may further store data.

The communication apparatus 1000 is applied to a BBU (for example, the first BBU or the second BBU). In a design, the processor 1010 may include a program 113 (which may alternatively be referred to as code or an instruction sometimes), and the program 113 may be run on the processor 1010, so that the communication apparatus 1000 performs the method on the BBU side in the foregoing embodiments. In another possible design, the communication apparatus 1000 includes a circuit (not shown in FIG. 10), and the circuit is configured to implement a function on the BBU side in the foregoing embodiments. Optionally, the processor 1010 may further store data.

The memory 1020 may be a non-volatile memory, for example, a hard disk drive (hard disk drive, HDD) or a solid-state drive (solid-state drive, SSD), or a volatile memory (volatile memory), for example, a random access memory (random access memory, RAM). The memory is any other medium that can be used to carry or store expected program code in a form of an instruction or a data structure and that can be accessed by a computer, but is not limited thereto. The memory in embodiments of this application may alternatively be a circuit or any other apparatus that can implement a storage function, and is configured to store a program and/or data. For example, the memory 1020 stores a program 114 (which may alternatively be referred to as code or an instruction sometimes), and the program 114 may be run on the processor 1010, so that the communication apparatus 1000 performs the methods described in the foregoing method embodiments.

Optionally, the processor 1010 may further include an artificial intelligence (artificial intelligence, AI) module 1110, and/or the memory 1020 may further include an AI module 118. The AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

The communication apparatus 1000 may further include a transceiver 1030 and/or an antenna 1040. The transceiver 1030 may alternatively be sometimes referred to as a transceiver unit, a transceiver machine, a transceiver circuit, a transceiver, or the like, and is configured to implement a transceiver function of the communication apparatus. For example, the transceiver 1030 may be a transceiver machine, a circuit, a bus, a module, a pin, or another type of communication interface. When the communication apparatus 1000 is a chip-type apparatus or circuit, the transceiver 1030 in the communication apparatus 1000 may alternatively be an input/output circuit, and may input information (or referred to as receiving information) and output information (or referred to as sending information). Optionally, when the communication apparatus 1000 includes an antenna 1040, the transceiver 1030 is configured to implement the transceiver function of the communication apparatus by using the antenna 1040.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 may operate in collaboration with one or more of the memory 1020, the transceiver 1030, and the antenna 1040. A specific connection medium between the processor 1010, the memory 1020, the transceiver 1030, and/or the antenna 1040 is not limited in this embodiment of this application. For example, the processor 1010, the memory 1020, and the transceiver 1030 are connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

Based on the foregoing example, an embodiment of this application further provides a communication system, including at least one BBU and at least one radio frequency device. The communication system may implement the communication method provided in the example shown in FIG. 6.

An embodiment of this application further provides a communication system, including at least one BBU, a switch device in a fronthaul network, and at least one radio frequency device. The communication system may implement the communication method provided in the example shown in FIG. 7.

The technical solutions provided in this embodiment of this application may be fully or partially implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions according to the embodiments of this application are generated. The computer may be a general-purpose computer, a special-purpose computer, a computer network, a network management device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, examples may be mutually referenced. For example, methods and/or terms in the method embodiments may be mutually referenced, functions and/or terms in the apparatus embodiments may be mutually referenced, and functions and/or terms between the apparatus examples and the method examples may be mutually referenced.

It is clear that, a person skilled in the art may make various modifications and variations to embodiments without departing from the scope of embodiments of this application. In this way, embodiments of this application are also intended to cover these modifications and variations provided that they fall within the scope of the claims of embodiments of this application and equivalent technologies thereof.

## Claims

1. A communication method, comprising:
obtaining first time information and second time information, wherein the first time information is time information synchronized through a fronthaul interface corresponding to a first baseband unit, and the second time information is time information synchronized through a fronthaul interface corresponding to a second baseband unit; and
sending clock offset information, wherein the clock offset information indicates an offset between the first time information and the second time information.

2. The method according to claim 1, wherein before sending the clock offset information, the method further comprises:
determining, based on the first time information and the second time information, that the first baseband unit is a master clock device.

3. The method according to claim 1 or 2, further comprising:
providing a clock source for a radio frequency device based on the first time information, wherein the radio frequency device communicates with the first baseband unit and the second baseband unit.

4. The method according to any one of claims 1 to 3, wherein sending the clock offset information comprises:
sending the clock offset information to the second baseband unit, wherein the clock offset information is used for fault determining for the second baseband unit.

5. The method according to any one of claims 1 to 4, further comprising:
sending first information to the first baseband unit, wherein the first information indicates one or more of the following:
the first baseband unit is a master clock device; and
a clock offset between the first baseband unit and the master clock device is zero.

6. The method according to any one of claims 1 to 5, wherein the first baseband unit is time-synchronized with a first external clock reference source, and the second baseband unit is time-synchronized with a second external clock reference source, wherein the first external clock reference source and the second external clock reference source are the same or different.

7. A communication method, comprising:
receiving clock offset information, wherein the clock offset information indicates an offset between first time information and second time information, the first time information is time information synchronized through a fronthaul interface corresponding to a first baseband unit, and the second time information is time information synchronized through a fronthaul interface corresponding to a second baseband unit; and
determining, based on the clock offset information, whether a fault exists on the second baseband unit.

8. The method according to claim 7, wherein the first baseband unit is a master clock device.

9. The method according to claim 7 or 8, wherein the first baseband unit is time-synchronized with a first external clock reference source, and the second baseband unit is time-synchronized with a second external clock reference source, wherein the first external clock reference source and the second external clock reference source are the same or different.

10. A communication apparatus, configured to implement the method according to any one of 1 to 6.

11. A communication apparatus, configured to implement the method according to any one of 7 to 9.

12. A communication apparatus, comprising a processor, wherein the processor is coupled to a memory, and the processor is configured to invoke computer program instructions stored in the memory, to perform the method according to any one of claims 1 to 6.

13. A communication apparatus, comprising a processor, wherein the processor is coupled to a memory, and the processor is configured to invoke computer program instructions stored in the memory, to perform the method according to any one of claims 7 to 9.

14. A communication system, comprising the communication apparatus according to claim 10 or 12, and the communication apparatus according to claim 11 or 13.

15. A computer-readable storage medium, wherein the computer-readable storage medium stores instructions, and when the instructions are run on a computer, the computer is enabled to perform the method according to any one of claims 1 to 6 or the method according to any one of claims 7 to 9.

16. A computer program product, comprising instructions, wherein when the instructions are run on a computer, the computer is enabled to perform the method according to any one of claims 1 to 6 or the method according to any one of claims 7 to 9.
